# EUROPEAN PATENT APPLICATION

(11) **EP 4 815 391 A1**
(43) Date of publication of application: **30.09.2026**
(21) Application number: 26164140.1
(22) Date of filing: 12.03.2026
(51) Int. Cl.: H04L 41/16, H04L 5/00, H04W 8/24, H04W 24/10

(54) **PROCESSING TIME FOR ARTIFICIAL INTELLIGENCE FUNCTION SWITCHING AND ACTIVATION**

(30) Priority: 27.03.2025 US 202563779182 P
(71) Applicant: Apple Inc., Cupertino, CA 95014 (US)
(72) Inventor: NIU, Huaning, Cupertino, 95014 (US); EKBAL, Amal, Cupertino, 95014 (US); HE, Hong, Cupertino, 95014 (US); OTERI, Oghenekome, Cupertino, 95014 (US); SUBRAHMANYA, Parvathanathan, Cupertino, 95014 (US); CHEN, Wanshi, Cupertino, 95014 (US); ZENG, Wei, Cupertino, 95014 (US); YANG, Weidong, Cupertino, 95014 (US)
(74) Representative: Zacco Denmark A/S

(57) **Abstract**

The present application relates to devices and components including apparatus, systems, and methods for handling processing time for artificial intelligence function switching and/or activation.

## Description

### CROSS-REFERENCE TO RELATED APPLICATION

This application claims priority to U.S. Provisional Patent Application No. 63/779,182, entitled "PROCESSING TIME FOR ARTIFICIAL INTELLIGENCE FUNCTION SWITCHING AND ACTIVATION," filed on March 27, 2025, which is herein incorporated by reference in its entirety for all purposes.

### TECHNICAL FIELD

This application relates generally to communication networks and, in particular, to technologies for processing time for artificial intelligence function switching and activation.

### BACKGROUND

Third Generation Partnership Project (3GPP) Technical Specifications (TSs) define standards for wireless networks. These TSs describe aspects related to signaling traffic through systems that incorporate wireless networks.

### BRIEF DESCRIPTION OF THE DRAWINGS

FIG. 1 illustrates a network environment in accordance with some embodiments.
FIG. 2A illustrates an example of a user equipment (UE) in accordance with some embodiments.
FIG. 2B illustrates an example of storage devices that may be available to a UE for storage of model parameters, in accordance with some embodiments.
FIG. 3 illustrates an example procedure for applicability reporting associated with one or more artificial intelligence (AI) / machine learning (ML) models, in accordance with some embodiments.
FIG. 4 illustrates an example procedure for signaling applicability information via a radio resource control (RRC) reconfiguration complete message, in accordance with some embodiments.
FIG. 5 illustrates an example procedure for signaling applicability information via UE assistance information, in accordance with some embodiments.
FIG. 6 illustrates an example timeline for switching between multiple active AI functions, in accordance with some embodiments.
FIG. 7 illustrates an example timeline for periodic reporting, in accordance with some embodiments.
FIG. 8 illustrates an example timeline for aperiodic reporting, in accordance with some embodiments.
FIG. 9 illustrates an example timeline for semi-persistent reporting, in accordance with some embodiments.
FIG. 10 illustrates an operation flow/algorithmic structure in accordance with some embodiments.
FIG. 11 illustrates another operation flow/algorithmic structure in accordance with some embodiments.
FIG. 12 illustrates another operation flow/algorithmic structure in accordance with some embodiments.
FIG. 13 illustrates a UE in accordance with some embodiments.
FIG. 14 illustrates a network device in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B); and the phrase "based on A" means "based at least in part on A," for example, it could be "based solely on A" or it could be "based in part on A."

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component or asset within a computing or network environment, or a physical or virtual component within, accessible by, or available to an apparatus, circuitry, device, or component. Resources could include, but are not limited to, memory space/usage, processor/CPU time, processor/CPU usage, processor and accelerator loads, hardware time or usage, electrical power, input/output operations, ports or network sockets, channel/link allocations, throughput, or workload units. A "hardware resource" may refer to compute, storage, or networking resources provided by physical hardware elements. A "virtualized resource" may refer to compute, storage, or networking resources provided by virtualization infrastructure to an application, device, or system. The term "communication resource" may refer to resources that are accessible by, or available to, computer devices/systems for transferring information over a channel of a communication network. For example, communication resources may include, but are not limited to, time/frequency resources, code resources, modulation resources, etc. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

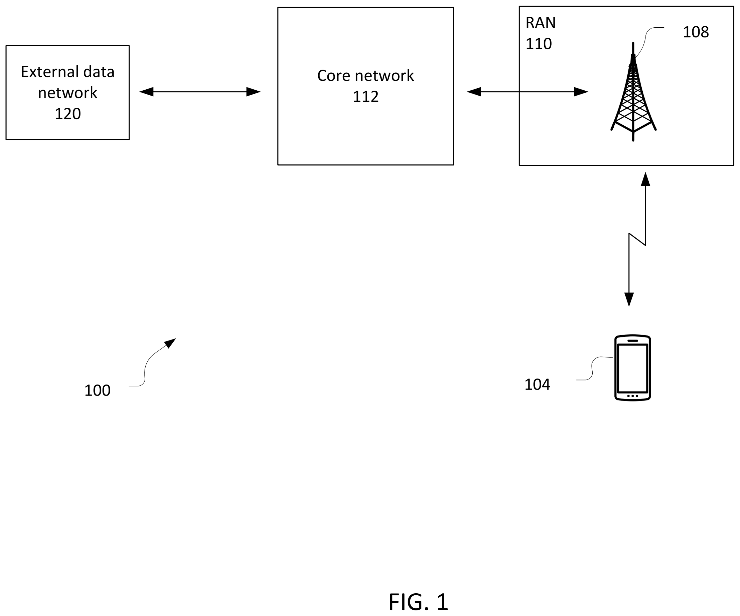

FIG. 1 illustrates a network environment 100 in accordance with some embodiments. The network environment 100 may include a user equipment (UE) 104 communicatively coupled with a base station 108 of a radio access network (RAN) 110. The UE 104 and the base station 108 may communicate over air interfaces compatible with 3GPP TSs such as those that define a Fifth Generation (5G) new radio (NR) system, a Sixth Generation (6G) system, or a later system. The base station 108 may provide user plane and control plane protocol terminations toward the UE 104.

The network environment 100 may further include a core network 112. For example, the core network 112 may comprise a 5G core network (5GC), a 6G core network (6GC), or later generation core network. The core network 112 may be coupled to the base station 108 via a fiber optic or wireless backhaul. The core network 112 may provide functions for the UE 104 via the base station 108. These functions may include managing subscriber profile information, subscriber location, authentication of services, or switching functions for voice and data sessions.

The network environment 100 may further include an external data network 120 with which the UE 104 may connect via the RAN 110.

In operation, the base station 108 may transmit downlink reference signals that the UE 104 measures to determine channel state information (CSI). The downlink reference signals may include CSI-reference signals (CSI-RSs) or synchronization signal blocks (SSBs). The CSI may include a channel quality indicator (CQI), a rank indicator (RI), a precoding matrix indicator (PMI), an SSB resource indicator (SSBRI), a CSI-RS resource indicator (CRI), a layer indicator (LI), or layer 1-reference signal receive power (L1-RSRP). The base station 108 may use the CSI to support downlink transmissions on a physical downlink shared channel (PDSCH) and physical downlink control channel (PDCCH).

NR networks support three types of the CSI measurement resources. Periodic CSI measurement resources may include CSI-RS or SSB and may be configured and released by radio resource control (RRC) signaling. Semi-persistent CSI measurement resources may include CSI-RS and may be activated and deactivated by media access control (MAC)-control element (CE). Aperiodic CSI measurement resources may include CSI-RS and may be triggered by downlink control information (DCI).

NR networks support three types of CSI reports; aperiodic CSI reports, semi-persistent CSI reports, and aperiodic CSI reports.

The periodic CSI reports may be carried by a physical uplink control channel (PUCCH). The periodic CSI report may be both configured and released by RRC signaling. The periodic CSI report may rely on periodic measurement resources (for example, CSI-RS or SSB).

A first type of semi-persistent CSI report may also be carried by the PUCCH. The first type of semi-persistent CSI report may be activated and deactivated by MAC-CE. The first type of semi-persistent CSI report may rely on periodic measurement resources (for example, CSI-RS or SSB) or semi-persistent measurement resources (for example, CSI-RS).

A second type of semi-persistent CSI report may be carried by a physical uplink shared channel (PUSCH). The second type of semi-persistent CSI report may be activated and deactivated by DCI. The second type of semi-persistent CSI report may rely on periodic measurement resources (for example, CSI-RS or SSB) or semi-persistent measurement resources (for example, CSI-RS).

The aperiodic CSI report may be carried by the PUSCH and may be triggered by DCI. The aperiodic CSI report may rely on periodic measurement resources (for example, CSI-RS or SSB), semi-persistent measurement resources (for example, CSI-RS), or aperiodic measurement resources (for example, CSI-RS).

The timing of a CSI report may depend on a CSI processing time of the UE. The minimum processing time may be defined per reportQuantity. The processing time does not depend on which reportQuantity was reported in the previous report. For example, Section 5.4 of 3GPP TS 38.214 v18.5.0 (2025-01-10) (hereinafter "TS 38.214") specifies a UE CSI computation time. An excerpt from Section 5.4 of TS 38.214 is provided below:
When the *CSI request* field on a DCI triggers a CSI report(s) on PUSCH, the UE shall provide a valid CSI report for the n-th triggered report,
   - if the first uplink symbol to carry the corresponding CSI report(s) including the effect of the timing advance, starts no earlier than at symbol *Z_{ref},* and
   - if the first uplink symbol to carry the n-th CSI report including the effect of the timing advance, starts no earlier than at symbol *Z'_{ref}(n),*
where *Z_{ref}* is defined as the next uplink symbol with its CP starting *T_{proc,CSI}*=(*Z*)(2048+144)·*κ*2*^{-µ}*·*T_{C}*+*T_{switch}* after the end of the last symbol of the PDCCH triggering the CSI report(s), and where *Z'_{ref}(n),* is defined as the next uplink symbol with its CP starting *T'_{proc,CSI}*=(*Z'*)(2048+144)·*κ*2^{-*µ*}·*T_{C}* after the end of the last symbol in time of the latest of: aperiodic CSI-RS resource for channel measurements, aperiodic CSI-IM used for interference measurements, and aperiodic NZP CSI-RS for interference measurement for a *CSI-ReportConfig,* or for all triggered sub-configurations if *CSI-ReportConfig* contains multiple sub-configurations, when aperiodic CSI-RS is used for channel measurement for the n-th triggered CSI report, and where *T_{switch}* is defined in clause 6.4 and is applied only if *Z*₁ of table 5.4-1 is applied.

Section 5.4 of TS 38.214 further provides definitions for Z, Z', and µ based on Table 5.4-1 and Table 5.4-2. For example, Section 5.4 of TS 38.214 states:
*Z*, *Z'* and *µ* are defined as:
$Z = {max}_{m = 0 , … , M - 1} \left(Z\left(m\right)\right)$ and $Z ′ = {max}_{m = 0 , … , M - 1} \left(Z′\left(m\right)\right)$, where *M* is the number of updated CSI report(s) according to Clause 5.2.1.6, (Z(m), *Z'*(*m*)) corresponds to the m-th updated CSI report and is defined as
- $\left({Z}_{1}, {Z}_{1}^{′}\right)$ of the table 5.4-1 if max {*µ_{PPDCCH}, µ*_{*CSI*-*RS*}, *µ_{UL}*} ≤ 3 and if the CSI is triggered without a PUSCH with either transport block or HARQ-ACK or both when *L* = 0 CPUs are occupied (according to Clause 5.2.1.6) and the CSI to be transmitted is a single CSI and corresponds to wideband frequency-granularity where the CSI corresponds to at most 4 CSI-RS ports in a single resource without CRI report and where *CodebookType* is set to 'typel-SinglePanel' or where *reportQuantity* is set to 'cri-RI-CQI', or
- $\left({Z}_{1}, {Z}_{1}^{′}\right)$ of the table 5.4-2 if the CSI to be transmitted corresponds to wideband frequency-granularity where the CSI corresponds to at most 4 CSI-RS ports in a single resource without CRI report and where *CodebookType* is set to 'typeI-SinglePanel' or where *reportQuantity* is set to 'cri-RI-CQI', or
- $\left({Z}_{1}, {Z}_{1}^{′}\right)$ of the table 5.4-2 if the CSI to be transmitted corresponds to wideband frequency-granularity where the *reportQuantity* is set to 'ssb-Index-SINR', 'cri-SINR', 'ssb-Index-SINR- Index ', or 'cri-SINR- Index ', or
- $\left({Z}_{3}, {Z}_{3}^{′}\right)$ of the table 5.4-2 if *reportQuantity* is set to 'cri-RSRP', 'ssb-Index-RSRP', 'cri-RSRP- Index' or 'ssb-Index-RSRP- Index ', where *X*µ is according to UE reported capability *beamReportTiming* and *KBₗ* is according to UE reported capability *beamSwitchTiming* as defined in [13, TS 38.306], or if the CSI report is configured with *ltm-CSI-ReportConfig* for L1-RSRP measurement, or
- $\left({Z}_{2}, {Z}_{2}^{′}\right)$ or $\left({Z}_{2}+{Z}_{2}^{′},2{Z}_{2}^{′}\right)$, according to UE reported capability, with $\left({Z}_{2}, {Z}_{2}^{′}\right)$ of table 5.4-2, if *codebookType* is set to 'typeII-CJT-r18' or 'typeII-CJT-PortSelection-r18' and the corresponding *NZP*-*CSI*-*RS*-*ResourceSet* for channel measurement is configured with 1 < *N_{TRP}* ≤ 4 resources, or
- $\left({Z}_{2}+14\left(K-1\right)m,{Z}_{2}^{′}\right)$, with $\left({Z}_{2}, {Z}_{2}^{′}\right)$ of table 5.4-2, if the CSI report is configured with *N*₄ = 1, *codebookType* is set to 'typeII-Doppler-r18' or 'typeII-Doppler-PortSelection-r18' and the corresponding *NZP-CSI-RS-ResourceSet* for channel measurement is aperiodic with K CSI-RS resources, or
- $\left({Z}_{2}+w,{Z}_{2}^{′}\right)$, with $\left({Z}_{2}, {Z}_{2}^{′}\right)$ of table 5.4-2, where *w*=56.(*K_{P}* -1) or 56.*K_{P}* symbols, according to the reported UE capability, where the value of *K_{P}* ∈ {1,2,4} is indicated by UE capability, if the CSI report is configured with *N*₄ = 1, *codebookType* is set to 'typeII-Doppler-r18' or 'typeII-Doppler-PortSelection-r18' and the corresponding *NZP*-*CSI*-*RS*-*ResourceSet* for channel measurement is periodic or semi-persistent with a single CSI-RS resource, or
- $\left({Z}_{2}+14\left(K-1\right)m,{Z}_{2}^{′}\right)$ or $\left({Z}_{2}+14\left(K-1\right)m+{Z}_{2}^{′},2{Z}_{2}^{′}\right)$, according to UE reported capability, with $\left({Z}_{2}, {Z}_{2}^{′}\right)$ of table 5.4-2, if the CSI report is configured with *N*₄ > 1, *codebookType* is set to 'typeII-Doppler-r18' and the corresponding *NZP-CSI-RS-ResourceSet* for channel measurement is aperiodic with *K* CSI-RS resources, or
- $\left({Z}_{2}+w,{Z}_{2}^{′}\right)$ or $\left({Z}_{2}+w+{Z}_{2}^{′},2{Z}_{2}^{′}\right)$, according to UE reported capability, with $\left({Z}_{2}, {Z}_{2}^{′}\right)$ of table 5.4-2, if the CSI report is configured with *N*₄ > 1, *codebookType* is set to 'typeII-Doppler-r18' and the corresponding *NZP*-*CSI*-*RS*-*ResourceSet* for channel measurement is periodic or semi-persistent with a single CSI-RS resource, or
- $\left({Z}_{2}, {Z}_{2}^{′}\right)$ of table 5.4-2 otherwise.
- *µ* of table 5.4-1 and table 5.4-2 corresponds to the min *(µ_{PDCCH}*, *µ_{CSI-RS}, µ_{UL})* where the *µ_{PDCCH}* corresponds to the subcarrier spacing of the PDCCH with which the DCI was transmitted and *µ_{UL}* corresponds to the subcarrier spacing of the PUSCH with which the CSI report is to be transmitted and *µ_{CSI-RS}* corresponds to the minimum subcarrier spacing of the aperiodic CSI-RS triggered by the DCI.

Tables 5.4-1 and 5.4-2 of TS 38.214 are shown below:

**Table 5.4-1: CSI computation delay requirement 1**

| *µ* | ***Z*₁ [symbols]** | |
|---|---|---|
| | *Z₁* | *Z'₁* |
| 0 | 10 | 8 |
| 1 | 13 | 11 |
| 2 | 25 | 21 |
| 3 | 43 | 36 |

**Table 5.4-2: CSI computation delay requirement 2**

| *µ* | ***Z₁* [symbols]** | | ***Z₂* [symbols]** | | ***Z₃* [symbols]** | |
|---|---|---|---|---|---|---|
| | *Z*₁ | Z*'₁* | *Z₂* | *Z'₂* | *Z₃* | *Z'₃* |
| 0 | 22 | 16 | 40 | 37 | 22 | *X*₀ |
| 1 | 33 | 30 | 72 | 69 | 33 | *X*₁ |
| 2 | 44 | 42 | 141 | 140 | min(44, X₃*X*₂+ KB₁) | *X*₂ |
| 3 | 97 | 85 | 152 | 140 | min(97, *X*₃+ KB₂) | *X*₃ |
| 5 | 388 | 340 | 608 | 560 | min(388, X5+ KB3) | *X5* |
| 6 | 776 | 680 | 1216 | 1120 | min(776, X6+ KB4) | *X6* |

In embodiments, the UE 104 may use one or more artificial intelligence / machine learning (ML) models for CSI (e.g., CSI prediction, CSI-RS estimation, and/or CSI compression) and/or other use cases, such as beam management (e.g., beam prediction) and/or positioning. In some cases, switching AI/ML models and/or activating AI/ML models may introduce additional time delay, e.g., due to the relatively large storage requirement of model parameters. The data storage requirements can vary widely between different types of AI/ML models. For example, a transformer-based CSI compression model may have about 1 million model parameters, while a simple long short-term memory (LSTM) model may have about 10,000 model parameters.

Various embodiments herein provide mechanisms to handle the additional delay for AI/ML model switching and/or activation. For example, the delay may be based on a state of the AI/ML model and/or a memory in which model parameters of the AI/ML model are stored.

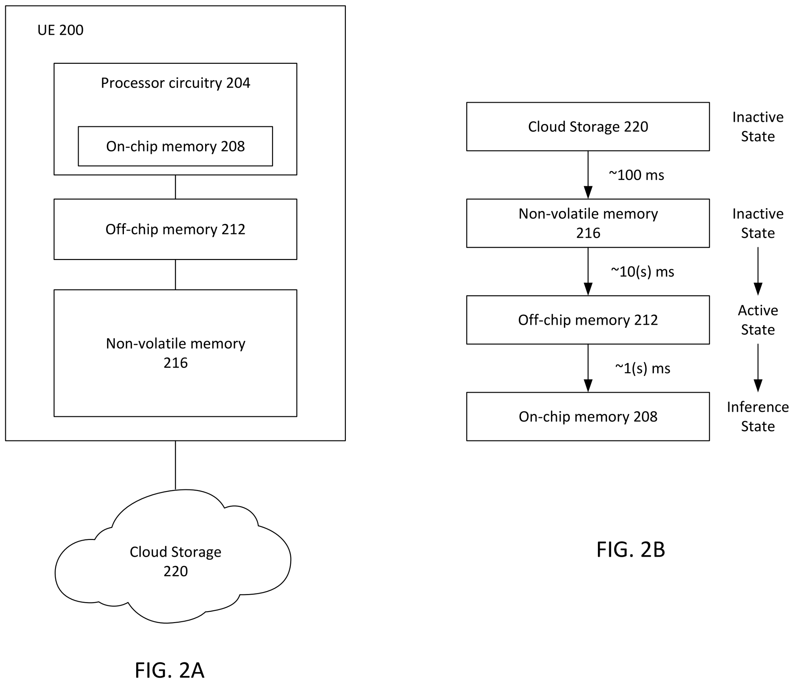

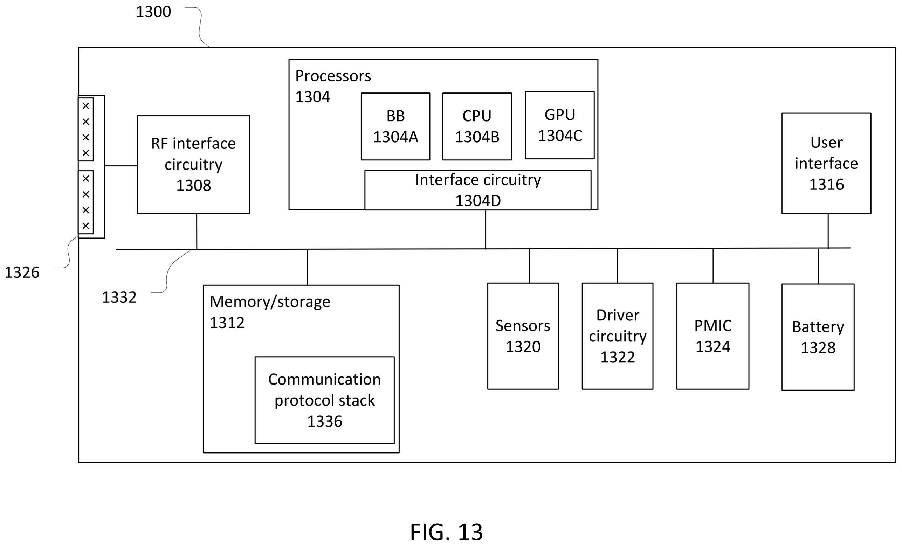

FIG. 2A illustrates an example of a UE 200 in accordance with some embodiments. The UE 200 may include processor circuitry 204 with on-chip memory 208. For example, processor circuitry 204 may correspond to processors 1304 of FIG. 13, such as baseband processor circuitry 1304A and/or another processor circuitry that implements one or more AI/ML models. The on-chip memory 208 may be included in the same integrated circuit chip and/or chipset as the processor circuitry 204. The UE 200 may further include off-chip memory 212, such as dynamic random access memory (DRAM). The UE 200 may further include non-volatile memory (NVM) 216. The UE 200 may further have access to cloud storage 220 external to the UE 200.

The on-chip memory 208 may provide the fastest access of stored data for the processor circuitry 204. In an example, the off-chip memory 212 may provide the next fastest access and the NVM 216 may provide the slowest access among the three memories of the UE 200. The NVM 216 may generally have the largest storage capacity, followed by the off-chip memory 212 and then the on-chip memory 208, although embodiments may not be limited to such an arrangement. Transferring data from cloud storage 220 may be slower than from the NVM 216 but with larger capacity.

In embodiments, different states for an AI/ML model may be defined. The model parameters associated with the AI/ML model may be stored in different locations depending on the model state. For example, the AI/ML model may be in a deactivated state when it is not currently activated and available for an inference operation. The deactivation and/or activation of AI/ML models may be configured by the network via signaling. When the AI/ML model is in the de-activated (or inactive) state, the model parameters may be stored in the NVM 216 and/or cloud storage 220.

The AI/ML model may be in an activated state (also referred to as a steady state or an applicable state) when the AI/ML model has been activated (e.g., by the network) but is not currently performing an inference operation. When the AI/ML model is in the activated state, the model parameters may be stored in the off-chip memory 212. The AI/ML model may be in an inference state when it is performing an inference operation. When the AI/ML model is in the inference state, the model parameters may be stored in the on-chip memory 208.

FIG. 2B illustrates the storage devices (e.g., on-chip memory 208, off-chip memory 212, NVM 216, and cloud storage 220) that may be available to the UE 200, along with example transfer/access times associated with transferring model parameters between storage devices. FIG. 2B further illustrates AI/ML model states (e.g., inactive, active, or inference state) associated with respective storage devices, as discussed above. Note that, in some instances, model parameters may be stored in a faster memory than is associated with the model state, e.g., based on available storage capacity and/or how recently the associated AI/ML model was used. For example, model parameters for an inactive AI/ML model may be stored in off-chip memory 212 and/or model parameters for an active AI/ML model may be stored in on-chip memory 208 if storage capacity allows. The UE signaling described herein may be used to indicate whether and/or how much additional delay is needed for transfer of model parameters between storage devices.

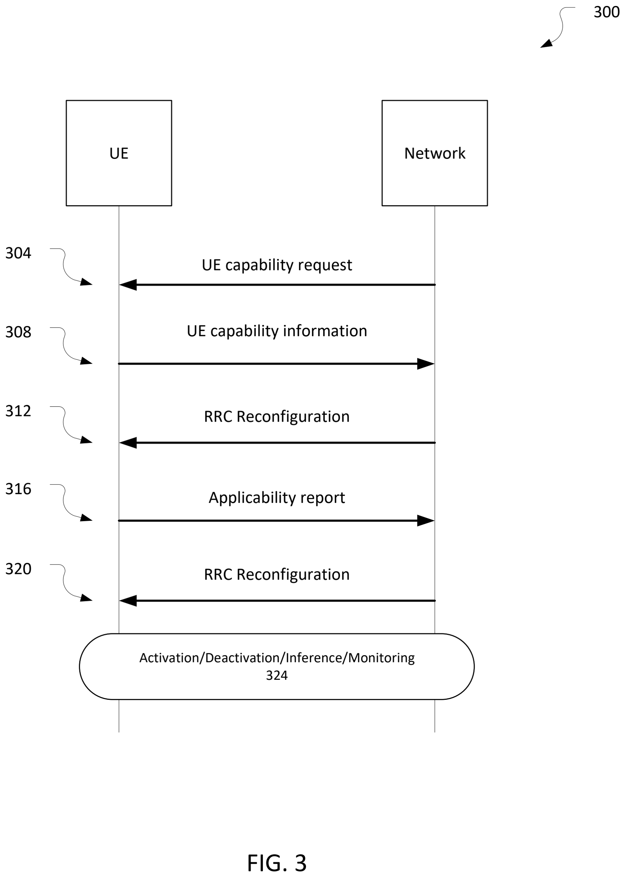

FIG. 3 illustrates a procedure 300 for applicability reporting associated with one or more AI/ML models, in accordance with some embodiments. Aspects of the procedure 300 may be performed by a UE (e.g., UE 104 and/or UE 200) and/or a network (e.g., base station 108), or components thereof (e.g., processor circuitry).

At 304 of the procedure 300, the network may transmit a request (e.g., UECapabilityEnquiry) to the UE for UE capability information. At 308 of the procedure 300, the UE may transmit UE capability information to the network. The UE capability information may indicate one or more capabilities associated with an AI/ML model. At 312 of the procedure 300, the network may transmit an RRC reconfiguration message, e.g., based on the UE capability information. The RRC reconfiguration message may include an inference configuration and/or an additional condition (e.g., network-side and/or UE-side condition) related to the AI/ML model.

At 316 of the procedure 300, the UE may transmit an applicability report to report applicable functionality information. In an example, the applicability report may be transmitted in an RRC reconfiguration complete message. In another example, the applicability report may be transmitted in UE assistance information. The applicable functionality information may indicate one or more applicable functionalities associated with the AI/ML model, e.g., with respect to an inference configuration and/or network/UE side additional condition. The UE may further report to the network when an applicable AI/ML functionality becomes non-applicable.

At 320, the network may transmit another RRC reconfiguration message to the UE, e.g., based on the applicability report.

At 324, the network may configure the UE to activate and/or deactivate one or more AI/ML models (e.g., for a semi-persistent or aperiodic report), trigger an inference (e.g., report) using one or more AI/ML models, and/or perform monitoring of one or more AI/ML models. Note that the activation and/or deactivation configured by operation 324 may be different than the active/steady state and/or deactivated/inactive state described herein.

In an example, the status of an AI/ML model may be updated from inactive state to active/steady state based on the applicability report (e.g., if the AI/ML model is identified as applicable in the applicability report). Accordingly, the UE may transfer model parameters associated with the AI/ML model from a first storage medium to a second storage medium (e.g., from NVM and/or cloud storage to off-chip memory).

In some embodiments, the UE may determine a mechanism through which to transmit the applicability information for an AI/ML model based on a length of time (referred to as a transfer time) required to transfer the model parameters to the second storage medium (e.g., into off-chip memory such as DRAM). For example, if the transfer time is less than a threshold, the UE may use the RRC reconfiguration complete message to indicate the applicability information for the AI/ML model. However, if the transfer time is greater than the threshold, the UE may use a UE assistance information message to indicate the applicability information. The longer delay required by the longer transfer time may require RRC-based signaling to be used. In an example, the threshold may be 15 milliseconds (ms), although other values of the threshold may also be used in accordance with various embodiments.

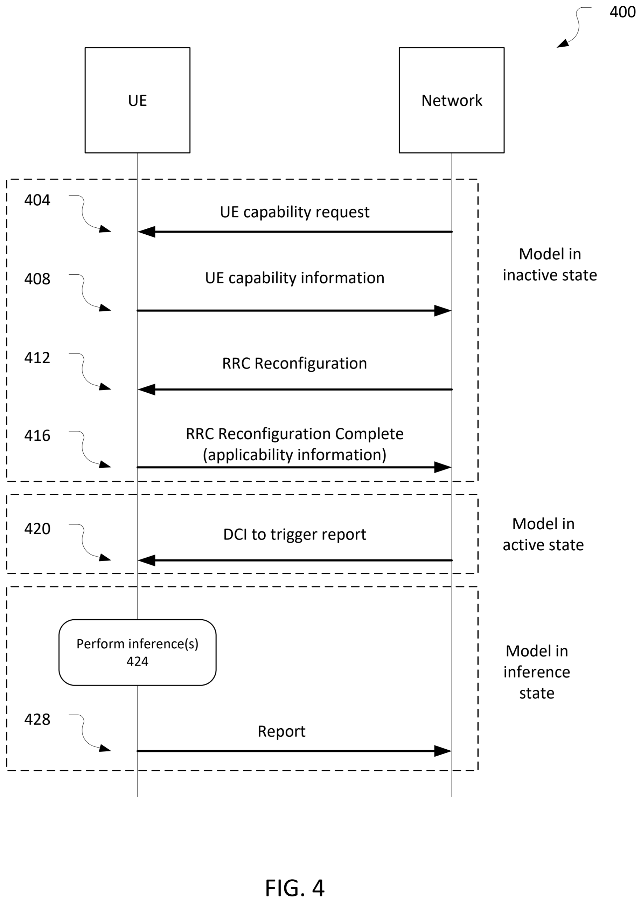

FIG. 4 illustrates an example procedure for signaling applicability information via RRC reconfiguration complete message, in accordance with some embodiments. Aspects of the procedure 400 may be performed by a UE (e.g., UE 104 and/or UE 200) and/or a network (e.g., base station 108), or components thereof (e.g., processor circuitry). Additionally, aspects of the procedure 400 may be similar to aspects of procedure 300 described above. In some embodiments, the procedure 400 may be used, for example, when the transition time for switching from the deactivated/inactive state to the active state (e.g., including a transfer time for transferring model parameters from the first storage medium (e.g., NVM and/or cloud storage) to the second storage medium (e.g., off-chip memory such as DRAM)) is less than a threshold (e.g., less than 15 ms). In another example, the procedure 400 may be used based on a storage location in which the model parameters are stored. For example, the procedure 400 may be used when the model parameters are stored in a local memory, such as NVM.

At 404 of the procedure 400, the network may transmit a request (e.g., UECapabilityEnquiry) to the UE for UE capability information. At 408 of the procedure 400, the UE may transmit UE capability information to the network. The UE capability information may indicate one or more capabilities associated with an AI/ML model. At 412 of the procedure 400, the network may transmit an RRC reconfiguration message, e.g., based on the UE capability information. The RRC reconfiguration message may include configuration information associated with the AI/ML model, such as an inference configuration and/or an additional condition (e.g., network-side and/or UE-side condition) related to the AI/ML model.

At 416 of the procedure 400, the UE may transmit, to the network, an RRC reconfiguration complete message that indicates applicability information associated with the AI/ML model. The AI/ML model may be in the deactivated/inactive state during operations 404, 408, 412, and/or 416 of procedure 400. The AI/ML model may transition to the active state based on transmission of the applicability information at 416 of the procedure 400. Accordingly, the UE may transfer model parameters associated with the AI/ML model from a first storage medium (e.g., NVM and/or cloud storage) to a second storage medium (e.g., off-chip memory, such as DRAM).

At 420 of the procedure 400, the UE may receive a DCI to trigger a report associated with the AI/ML model. For example, the report may be a semi-persistent report or an aperiodic report. At 424, the UE may perform one or more inferences for the report using the AI/ML model. For example, the UE may transition the AI/ML model to the inference state based on the DCI. Accordingly, the UE may transfer the model parameters associated with the AI/ML model from the second storage medium to a third storage medium (e.g., on-chip memory).

At 428 of the procedure 400, the UE may transmit the report to the network. The report may include a result from the one or more inferences.

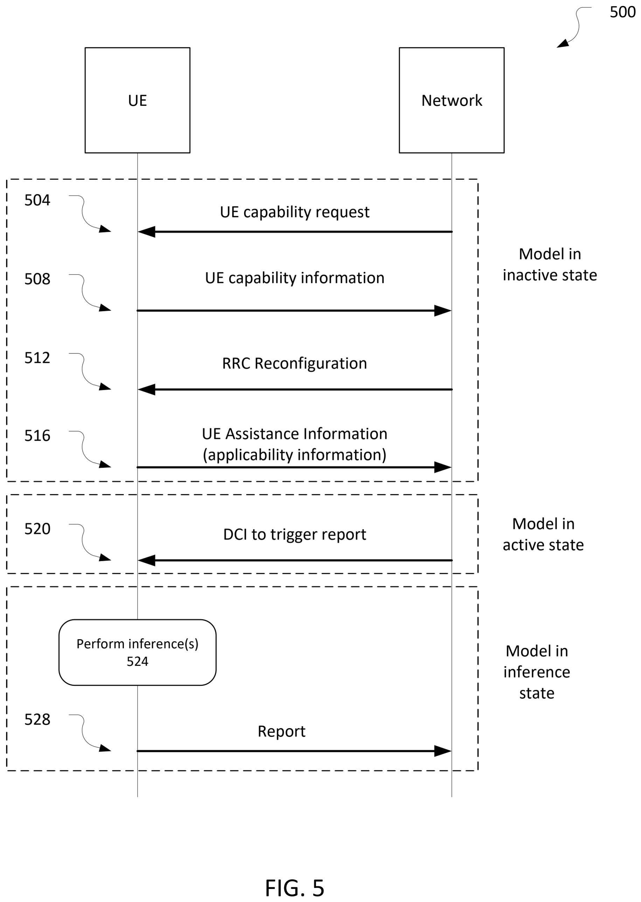

FIG. 5 illustrates an example procedure 500 for signaling applicability information via UE assistance information, in accordance with some embodiments. Aspects of the procedure 500 may be performed by a UE (e.g., UE 104 and/or UE 200) and/or a network (e.g., base station 108), or components thereof (e.g., processor circuitry). The procedure 500 may be used, for example, when the transition time for switching from the deactivated/inactive state to the active state (e.g., including a transfer time for transferring model parameters from the first storage medium (e.g., NVM and/or cloud storage) to the second storage medium (e.g., off-chip memory such as DRAM)) is greater than a threshold (e.g., more than 15 ms). In another example, the procedure 500 may be used based on a storage location in which the model parameters are stored. For example, the procedure 500 may be used when the model parameters are stored in cloud storage.

Operations 504, 508, 512, 520, 524, and 528 may be similar to corresponding operations 404, 408, 412, 420, and 424 of procedure 400. However, at 516 of procedure 500, the UE may transmit applicability information associated with the UE model to the network via UE assistance information (e.g., instead of an RRC reconfiguration complete message). The UE may use the UE assistance information to indicate the applicability information based on a transfer time for transferring model parameters from the first storage medium (e.g., NVM and/or cloud storage) to the second storage medium (e.g., off-chip memory such as DRAM) being greater than the threshold.

In addition to or instead of as part of the UE capability reporting procedure of FIGS. 2-4, an AI/ML model may transition from inactive state to active state may occur based on one or more other events. For example, an AI/ML model, such as a site-specific model, may activated and/or switched based on one or more events, such as tracking area update (TAU), handover, cell addition, transmission configuration indicator (TCI) change, bandwidth part (BWP) switch, etc. In another example, the active AI/ML model may be switched based on GPS changing map tiles and/or another configuration change. In embodiments, the UE may use UE assistance information to notify the network of the change in active AI/ML model (e.g., based on the delay for model activation as described herein).

As discussed above, when the UE is to perform an inference using an AI/ML model, the UE may transition the AI/ML model to the inference state. For example, the UE may transfer model parameters associated with the AI/ML model to on-chip memory (e.g., from off-chip memory). In some embodiments, multiple AI/ML models may be active (e.g., in active state) during a given time. The UE may transfer the model parameters for one or more of the AI/ML models to on-chip memory based on switching to an inference (e.g., AI function) for a different model and/or based on capacity of the on-chip memory.

In some embodiments, the UE may transmit a capability indication to the network to indicate a processing delay to perform an inference when the AI function switches (e.g., when a prior inference used a different AI/ML model). In an example, the capability indication may be transmitted to the network in the applicability information (e.g., in the RRC reconfiguration message and/or UE assistance information). The processing delay may be an additional processing delay in addition to a processing delay based on the report quantity (e.g., as described above with respect to CSI reports). For example, the additional processing delay may correspond to a delay required to transition the AI/ML model from the active state to the inference state. The additional processing delay may include the delay required to transfer the model parameters to the on-chip memory (e.g., from the off-chip memory).

In some instances, the delay required to move model parameters to the on-chip memory may be significantly faster than the delay required to move model parameters from NVM and/or cloud storage to the off-chip memory. For example, the additional processing delay reported to the network may be on the order of milliseconds, although embodiments may also include longer processing delays.

In some instances, the UE may report that no additional processing delay is required. For example, the UE may be capable of switching AI functions with negligible delay, e.g., if the UE is able to store model parameters for multiple models in the on-chip memory and/or quickly transfer model parameters to the on-chip memory. When the UE reports that no additional processing delay is required to switch AI functions, the processing delay for an associated report may still depend on the report quantity (e.g., without an additional processing delay added).

In some embodiments, different report quantities for AI functions may correspond to different processing delays. In an example, inference delay values of Z1, Z2, and/or Z3 (or corresponding values with different names, such as A1, A2, and/or A3) may be defined to determine a processing time from a triggering message (e.g., DCI) to an associated report for an AI-based inference report (e.g., for an aperiodic report and/or an initial report of a semi-persistent report). Additionally, or alternatively, inference delay values of Z1', Z2', and/or Z3' (or corresponding values with different names, such as A1', A2', and/or A3') may be defined to determine a processing time from a reference signal to an associated report for an Al-based inference report (e.g., for a periodic report and/or a subsequent report of a semi-persistent report). In some embodiments, the values of Z1, Z2, Z3, Z1', Z2', and/or Z3' may be further defined based on an associated AI function (e.g., with different AI functions having different values).

In some embodiments, the UE may report an inference delay value (e.g., Z1, Z2, Z3, Z1', Z2', and/or Z3' and/or a corresponding value with a different name) associated with an AI function and/or model. For example, the UE may report the inference delay value in the applicability information (e.g., in RRC reconfiguration complete message and/or UE assistance information). The UE may report multiple inference delay values associated with different respective AI functions and/or models.

In an example, a set of candidate values for inference delay values may be predefined. The UE may indicate one of the candidate values that applies for a respective AI function and/or model. In another example, the UE may indicate an enumerated value of the inference delay. In another example, a single value of inference delay values may be predefined (e.g., in the 3GPP TS) for a respective AI function and/or model.

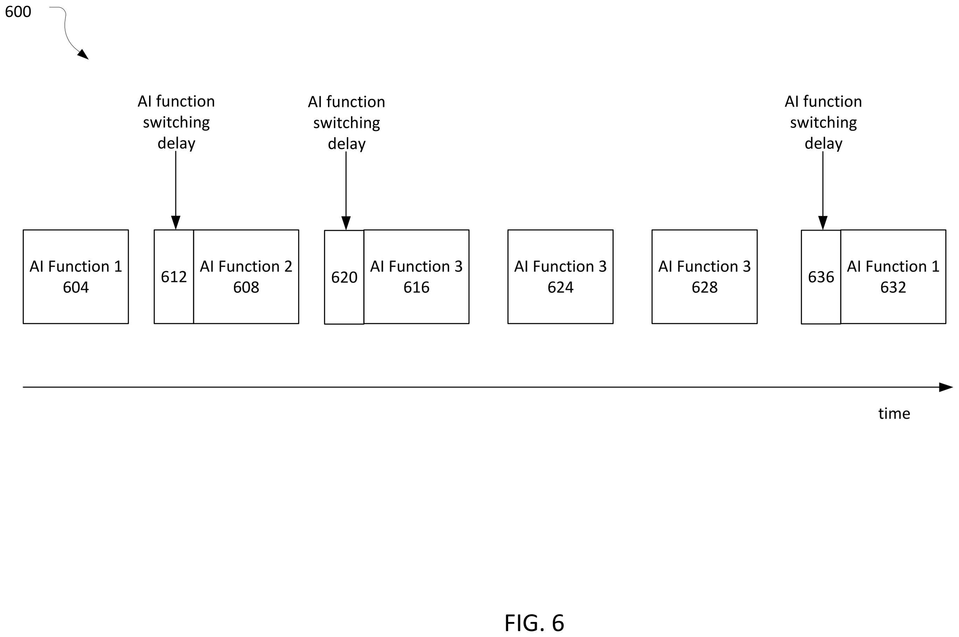

FIG. 6 illustrates an example timeline 600 with multiple active AI functions and associated delays for switching AI functions, in accordance with some embodiments. As shown, a UE may have three AI functions (and associated models) active, AI function 1, AI function 2, and AI function 3. The UE may initially have model parameters for AI function 1 stored in on-chip memory.

At 604, the UE may perform AI function 1 (e.g., perform an inference using a first AI/ML model).

At 608, the UE may perform AI function 2 (e.g., perform an inference using a second AI/ML model). The switch to the different AI function may require an additional processing delay 612 prior to performing the AI function 2.

At 616, the UE may perform a first iteration of AI function 3 (e.g., perform an inference using a third AI/ML model). The switch to the different AI function may require an additional processing delay 620 prior to performing the AI function 3. The processing delay 620 may be different than (or the same as) the processing delay 612, e.g., depending on the size of the associated model parameters.

At 624, the UE may perform a second iteration of the AI function 3. At 628, the UE may perform a third iteration of the AI function 3. The UE may not require an additional processing delay prior to performing the second and third iterations since there was no AI function switch since the first iteration of the AI function 3.

At 632, the UE may perform another iteration of the AI function 1. Since there is an AI function switch in this instance, the UE may require an additional processing delay 636. The additional processing delay 636 may be different than (or the same as) the processing delay 612 and/or 620.

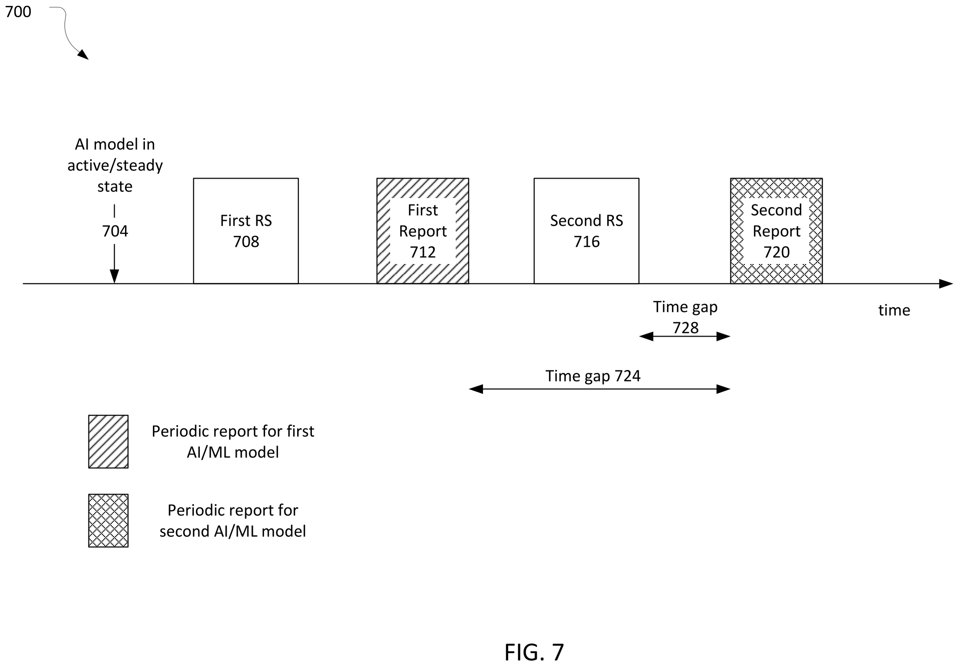

FIG. 7 illustrates an example timeline 700 for periodic reports when the UE capability indicates additional delay is required for an AI function switch, in accordance with some embodiments. The UE may be configured with a first periodic report associated with a first AI function (e.g., using a first AI/ML model) and a second periodic report associated with a second AI function (e.g., using a second AI/ML model). The first and second periodic reports may be CSI reports and/or another type of report.

At 704, the first and second AI models may be activated. For example, the first and second AI models may be activated after RRC configuration and/or applicability reporting as described herein. The RRC configuration may schedule resources for reference signal transmission and/or reporting for the first and second periodic reports.

For example, the UE may receive a first reference signal (RS) 708 as shown. The first RS 708 may include, for example, a CSI-RS and/or SSB. The UE may generate an inference based on the first RS 708 (e.g., based on one or more measurements on the first RS 708) using the first AI/ML model and generate a first periodic report 712 for transmission based on the inference. For example, the UE may generate first CSI based on the inference.

The UE may receive a second RS 716 (e.g., after the first periodic report 712) and may perform an inference based on the second RS 716 (e.g., based on one or more measurements on the second RS 716). The UE may generate a second periodic report 720 for transmission based on the inference. For example, the UE may generate second CSI based on the inference.

In embodiments, a timeline requirement of the UE for a time gap between adjacent reports for different AI functions/models (e.g., time gap 724 between the first RS 708 and second RS 716 in timeline 700) and/or between the second reference signal and the associated report when there is an AI function/model switch (e.g., time gap 728 between second RS 716 and second report 720) may be based on an additional processing delay, X1, required by the UE for AI function switching (e.g., as reported to the network). For example, to satisfy the timeline requirement of the UE, the time gap 728 may be greater than X1 + Z1'/Z2'/Z3' (e.g., Z1', Z2', and/or Z3'). The values of Z1', Z2', and/or Z3' may be defined based on a report quantity associated with the respective CSI report.

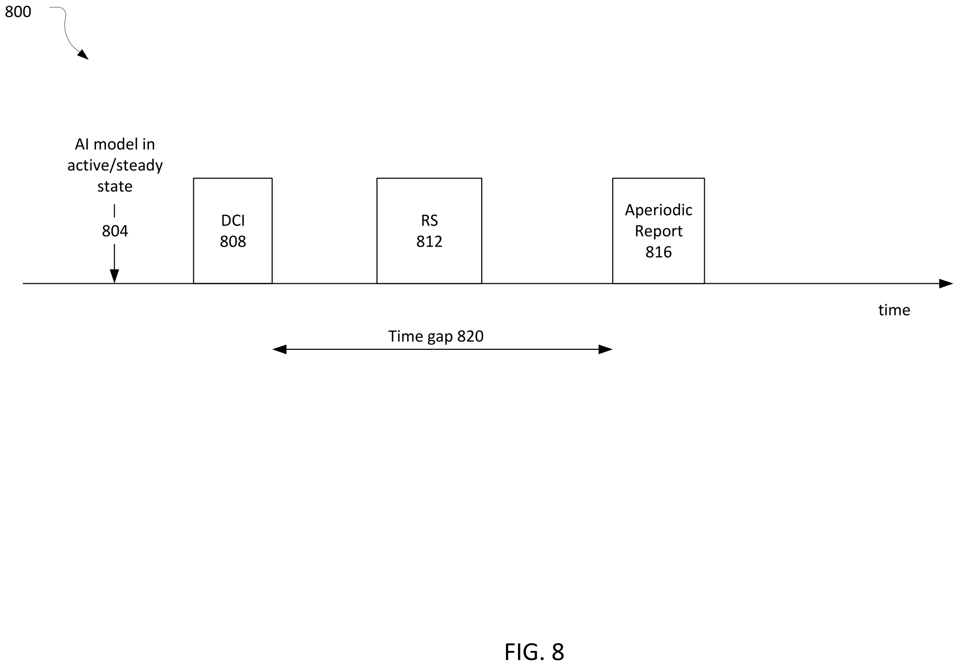

FIG. 8 illustrates an example timeline 800 for an aperiodic report, in accordance with some embodiments. At 804, an AI/ML model may be activated. The model may be activated after RRC configuration and/or applicability reporting. The RRC configuration may include configuration information related to aperiodic reporting (e.g., CSI reporting and/or another type of reporting).

For example, the UE may receive a DCI 808 to trigger an aperiodic report. The UE may identify a resource for a reference signal and/or the aperiodic report based on the DCI 808 and/or the previously received configuration information. For example, the UE may receive an RS 812 and transmit an aperiodic report 816.

In embodiments, a timeline requirement of the UE for a time gap 820 between the DCI 808 and the aperiodic report 816 triggered by the DCI may be based on the additional delay, X1, associated with transitioning the AI/ML model to inference state from active state. For example, to satisfy the timeline requirement, the time gap 820 may be greater than X1 + Z1/Z2/Z3 (e.g., Z1, Z2, and/or Z3). The values of Z1, Z2, and/or Z3 may be defined based on a report quantity associated with the aperiodic report 816.

In some embodiments, the timeline requirement for the aperiodic report 816 may include the additional delay X1 regardless of whether a prior report used the same AI/ML model (e.g., regardless of whether a model switch was needed). In other embodiments, the timeline requirement for the aperiodic report 816 may omit the additional delay X1 if a prior report also used the same AI/ML model (e.g., if no model switch was needed).

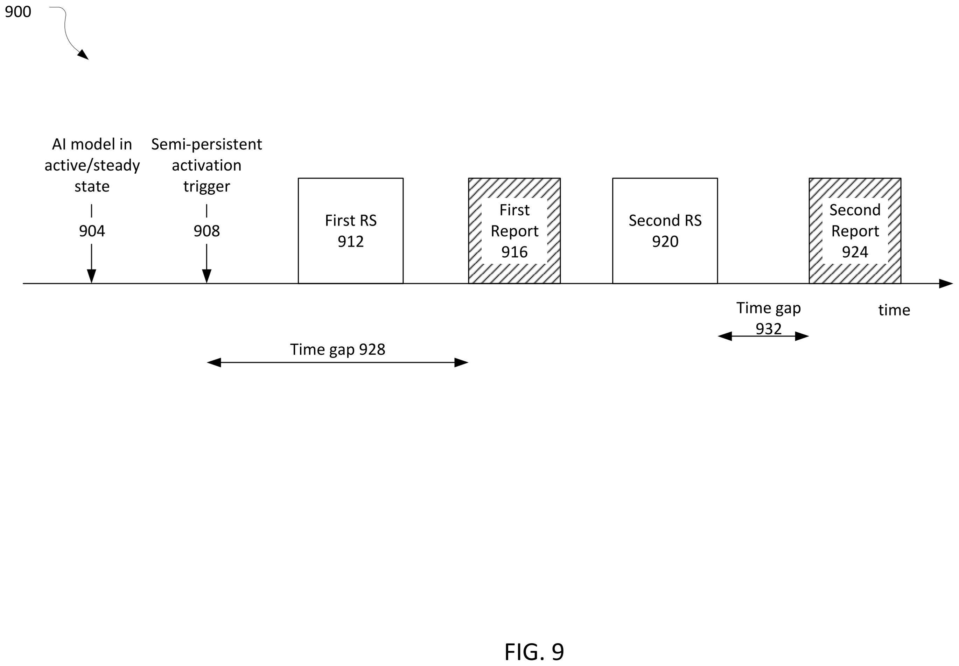

FIG. 9 illustrates an example timeline 900 for a semi-persistent report, in accordance with some embodiments. At 904, an AI/ML model may be activated. The model may be activated after RRC configuration and/or applicability reporting. The RRC configuration may include configuration information related to semi-persistent reporting (e.g., CSI reporting and/or another type of reporting).

The UE may detect an activation trigger 908 to trigger semi-persistent reporting. For example, the activation trigger 908 may include a DCI or a MAC-CE. The activation trigger 908 may trigger the UE to generate and transmit multiple reports (e.g., based on respective reference signals).

For example, the UE may receive a first RS 912 and generate a first report 916 for transmission based on a measurement on the first RS 912. The UE may additionally receive a second RS 920 and generate a second report 924 based on a measurement on the second RS 920.

In embodiments, a first timeline requirement of the UE for a time gap 928 between the activation trigger 908 and the first report 916 triggered by the activation trigger 908 may be based on the additional delay, X1, associated with transitioning the AI/ML model to inference state from active state. For example, to satisfy the first timeline requirement, the time gap 928 may be greater than X1 + Z1/Z2/Z3 (e.g., Z1, Z2, and/or Z3).

However, a second timeline requirement of the UE for a time gap 932 between the second RS 920 and the second report 924 may not include the additional delay X1, e.g., since there is no AI function switch required for the second report 924. For example, to satisfy the second timeline requirement, the time gap 932 may be greater than Z1'/Z2'/Z3' (e.g., Z1', Z2', and/or Z3').

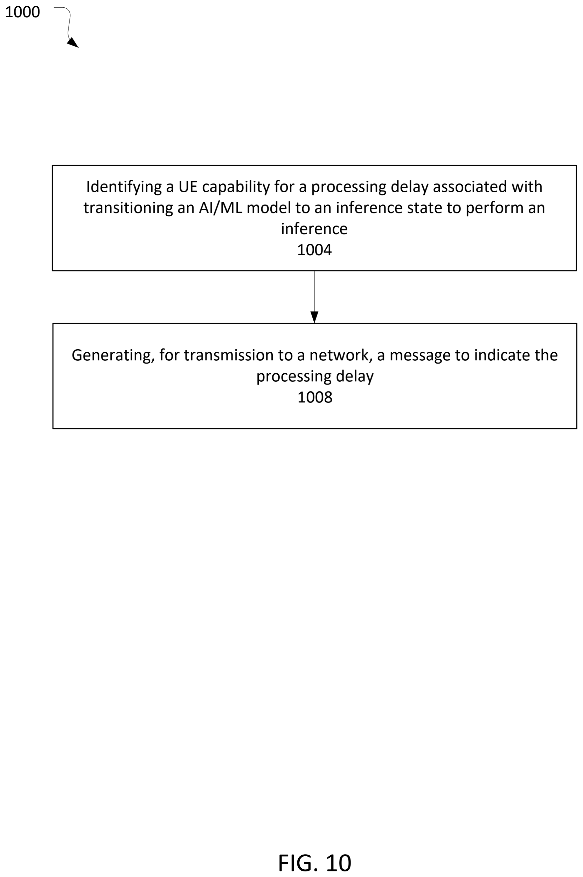

FIG. 10 is an operation flow/algorithmic structure 1000 in accordance with some embodiments. The operation flow/algorithmic structure 1000 may be implemented by a UE such as, for example, UE 104, UE 1300, or components thereof; for example, a baseband processor 1304A.

The operation flow/algorithmic structure 1000 may include, at 1004, identifying a UE capability for a processing delay associated with transitioning an AI/ML model to an inference state to perform an inference. In an example, the processing delay may be based on one or more characteristics of the AI/ML model, such as a size of model parameters associated with the AI/ML model. For example, the processing delay may include a transfer time to transfer model parameters associated with the AI/ML model from a first memory (e.g., off-chip memory such as DRAM) to a second memory (e.g., on-chip memory).

The operation flow/algorithmic structure 1000 may further include, at 1008, generating, for transmission to a network, a message to indicate the processing delay. In an example, the UE may be configured with one or more reports associated with the AI/ML model based on the processing delay. The one or more reports may include one or more periodic reports, semi-persistent reports, and/or aperiodic reports. The UE may transmit the reports in accordance with a timeline requirement that is based on the processing delay.

In some embodiments, the UE may further transmit, to the network, an indication of an inference delay associated with performing the inference. The inference delay may be included in the same message that indicates the processing delay and/or another message. The timeline requirement described above may be further based on the inference delay.

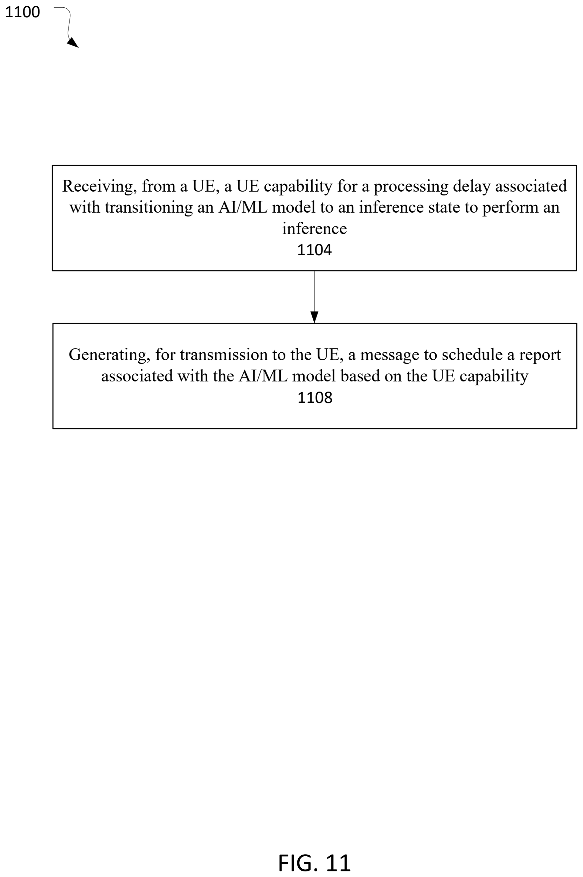

FIG. 11 illustrates another operation flow/algorithmic structure 1100 in accordance with some embodiments. The operation flow/algorithmic structure 1100 may be implemented by a network device such as, for example, base station 108, network device 1400, or components thereof; for example, a baseband processor 1404A.

The operation flow/algorithmic structure 1100 may include, at 1104, receiving, from a UE, a UE capability for a processing delay associated with transitioning an AI/ML model to an inference state to perform an inference. In an example, the processing delay may be based on one or more characteristics of the AI/ML model, such as a size of model parameters associated with the AI/ML model. For example, the processing delay may include a transfer time to transfer model parameters associated with the AI/ML model from a first memory (e.g., off-chip memory such as DRAM) to a second memory (e.g., on-chip memory).

The operation flow/algorithmic structure 1100 may further include, at 1108, generating, for transmission to the UE, a message to schedule a report associated with the AI/ML model based on the UE capability. The report may include, for example, a periodic report, a semi-persistent report, and/or an aperiodic report. The network device may receive the report in accordance with a timeline requirement that is based on the processing delay.

In some embodiments, the network device may further receive, from the UE, an indication of an inference delay associated with performing the inference. The inference delay may be included in the same message that indicates the processing delay and/or another message. The timeline requirement described above may be further based on the inference delay.

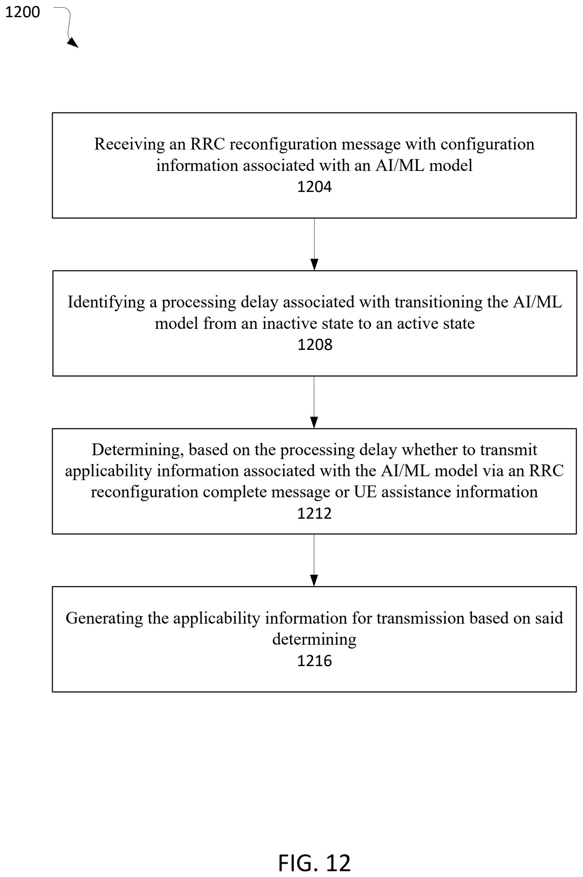

FIG. 12 is another operation flow/algorithmic structure 1200 in accordance with some embodiments. The operation flow/algorithmic structure 1200 may be implemented by a UE such as, for example, UE 104, UE 1300, or components thereof; for example, a baseband processor 1304A.

The operation flow/algorithmic structure 1200 may include, at 1204, receiving an RRC reconfiguration message with configuration information associated with an AI/ML model.

The operation flow/algorithmic structure 1200 may further include, at 1208, identifying a processing delay associated with transitioning the AI/ML model from an inactive state to an active state.

The operation flow/algorithmic structure 1200 may further include, at 1212, determining, based on the processing delay whether to transmit applicability information associated with the AI/ML model via an RRC reconfiguration complete message or UE assistance information. For example, the UE may determine to transmit the applicability information via the RRC reconfiguration complete message based on the processing delay being less than a threshold (e.g., 15 ms or another suitable value). In another example, the UE may determine to transmit the applicability information via the UE assistance information based on the processing delay being greater than a threshold (e.g., 15 ms or another suitable value).

The operation flow/algorithmic structure 1200 may further include, at 1216, generating the applicability information for transmission based on said determining.

FIG. 13 illustrates a UE 1300 in accordance with some embodiments. The UE 1300 may be similar to and substantially interchangeable with UE 104 and/or UE 200.

The UE 1300 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The UE 1300 may include processors 1304, RF interface circuitry 1308, memory/storage 1312, user interface 1316, sensors 1320, driver circuitry 1322, power management integrated circuit (PMIC) 1324, antenna 1326, and battery 1328. The components of the UE 1300 may be implemented as integrated circuits (ICs), portions thereof, discrete electronic devices, or other modules, logic, hardware, software, firmware, or a combination thereof. The block diagram of FIG. 13 is intended to show a high-level view of some of the components of the UE 1300. However, some of the components shown may be omitted, additional components may be present, and different arrangement of the components shown may occur in other implementations.

The components of the UE 1300 may be coupled with various other components over one or more interconnects 1332, which may represent any type of interface, input/output, bus (local, system, or expansion), transmission line, trace, or optical connection that allows various circuit components (on common or different chips or chipsets) to interact with one another.

The processors 1304 may include processor circuitry such as, for example, baseband processor circuitry (BB) 1304A, central processor unit circuitry (CPU) 1304B, and graphics processor unit circuitry (GPU) 1304C. The processors 1304 may include any type of circuitry or processor circuitry that executes or otherwise operates computer-executable instructions, such as program code, software modules, or functional processes from memory/storage 1312 to cause the UE 1300 to perform operations associated with processing time for AI/ML model activation and/or switching as described herein. The processors 1304 may also include interface circuitry 1304D to enable communication by, for example, communicatively coupling the processor circuitry with one or more other components of the UE 1300.

In some embodiments, the baseband processor 1304A may access a communication protocol stack 1336 in the memory/storage 1312 to communicate over a 3GPP compatible network. In general, the baseband processor 1304A may access the communication protocol stack 1336 to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a NAS layer. In some embodiments, the PHY layer operations may additionally/alternatively be performed by the components of the RF interface circuitry 1308.

The baseband processor 1304A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The memory/storage 1312 may include one or more non-transitory, computer-readable media that includes instructions (for example, communication protocol stack 1336) that may be executed by one or more of the processors 1304 to cause the UE 1300 to perform various operations as described herein including, for example, operation flow/algorithmic structure 1000 of FIG. 10 and/or operation flow/algorithmic structure 1200 of FIG. 12.

The memory/storage 1312 includes any type of volatile or non-volatile memory that may be distributed throughout the UE 1300. In some embodiments, some of the memory/storage 1312 may be located on the processors 1304 themselves, e.g., corresponding to on-chip memory 208 of UE 200. For example, memory/storage 1312 may be part of a chipset that corresponds to the baseband processor 1304A. Other memory/storage 1312 is external to the processors 1304 but accessible thereto via a memory interface, e.g., corresponding to off-chip memory 212 and/or NVM 216 of UE 200. The memory/storage 1312 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1308 may include transceiver circuitry and a radio frequency front module (RFEM) that allows the UE 1300 to communicate with other devices over a radio access network. The RF interface circuitry 1308 may include various elements arranged in transmit or receive paths. These elements may include, for example, switches, mixers, amplifiers, filters, synthesizer circuitry, and control circuitry.

In the receive path, the RFEM may receive a radiated signal from an air interface via antenna 1326 and proceed to filter and amplify (with a low-noise amplifier) the signal. The signal may be provided to a receiver of the transceiver that down-converts the RF signal into a baseband signal that is provided to the baseband processor of the processors 1304.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1326.

In various embodiments, the RF interface circuitry 1308 may be configured to transmit/receive signals in a manner compatible with NR access technologies.

The antenna 1326 may include antenna elements to convert electrical signals into radio waves to travel through the air and to convert received radio waves into electrical signals. The antenna elements may be arranged into one or more antenna panels. The antenna 1326 may have antenna panels that are omnidirectional, directional, or a combination thereof to enable beamforming and multiple input, multiple output communications. The antenna 1326 may include microstrip antennas, printed antennas fabricated on the surface of one or more printed circuit boards, patch antennas, or phased array antennas. The antenna 1326 may have one or more panels designed for specific frequency bands including bands in FR1 or FR2.

The user interface 1316 includes various input/output (I/O) devices designed to enable user interaction with the UE 1300. The user interface 1316 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 1300.

The sensors 1320 may include devices, modules, or subsystems whose purpose is to detect events or changes in their environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 1322 may include software and hardware elements that operate to control particular devices that are embedded in the UE 1300, attached to the UE 1300, or otherwise communicatively coupled with the UE 1300. The driver circuitry 1322 may include individual drivers allowing other components to interact with or control various input/output (I/O) devices that may be present within, or connected to, the UE 1300. For example, driver circuitry 1322 may include a display driver to control and allow access to a display device, a touchscreen driver to control and allow access to a touchscreen interface, sensor drivers to obtain sensor readings of sensors 1320 and control and allow access to sensors 1320, drivers to obtain actuator positions of electro-mechanic components or control and allow access to the electro-mechanic components, a camera driver to control and allow access to an embedded image capture device, audio drivers to control and allow access to one or more audio devices.

The PMIC 1324 may manage power provided to various components of the UE 1300. In particular, with respect to the processors 1304, the PMIC 1324 may control power-source selection, voltage scaling, battery charging, or DC-to-DC conversion.

A battery 1328 may power the UE 1300, although in some examples the UE 1300 may be mounted deployed in a fixed location and may have a power supply coupled to an electrical grid. The battery 1328 may be a lithium ion battery, a metal-air battery, such as a zinc-air battery, an aluminum-air battery, a lithium-air battery, and the like. In some implementations, such as in vehicle-based applications, the battery 1328 may be a typical lead-acid automotive battery.

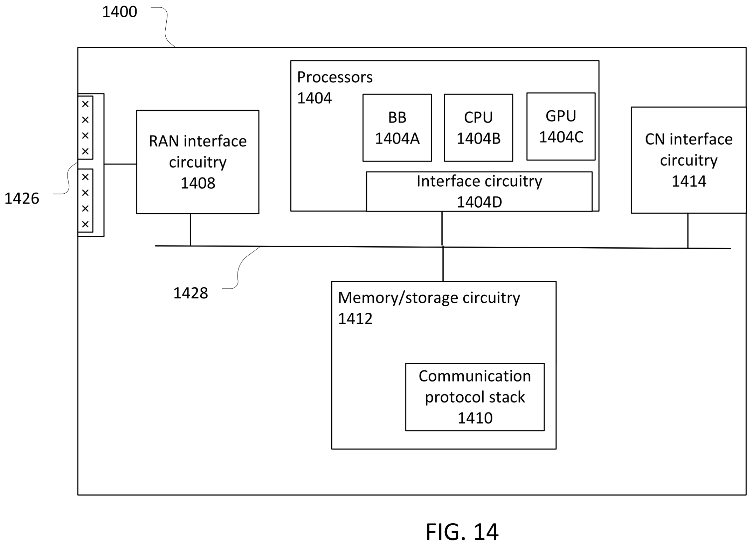

FIG. 14 illustrates a network device 1400 in accordance with some embodiments. The network device 1400 may be similar to and substantially interchangeable with base station 108 or a device of the core network 112 or external data network 120.

The network device 1400 may include processors 1404, RF interface circuitry 1408 (if implemented as a base station), core network (CN) interface circuitry 1414, memory/storage circuitry 1412, and antenna structure 1426.

The components of the network device 1400 may be coupled with various other components over one or more interconnects 1428.

The processors 1404, RF interface circuitry 1408, memory/storage circuitry 1412 (including communication protocol stack 1410), antenna structure 1426, and interconnects 1428 may be similar to like-named elements shown and described with respect to FIG. 13.

The processors 1404 may include processor circuitry such as, for example, baseband processor circuitry (BB) 1404A, central processor unit circuitry (CPU) 1404B, and graphics processor unit circuitry (GPU) 1404C. The processors 1404 may include any type of circuitry or processor circuitry that executes or otherwise operates computer-executable instructions, such as program code, software modules, or functional processes from memory/storage circuitry 1412 to cause the network device 1400 to perform operations related to processing time for AI/ML model activation and/or switching as described herein including, for example, operation flow/algorithmic structure 1100 of FIG. 11. The processors 1404 may also include interface circuitry 1404D to enable communication by, for example, communicatively coupling the processor circuitry with one or more other components of the network device 1400.

The CN interface circuitry 1414 may provide connectivity to a core network, for example, a 5^{th} Generation Core network (5GC) using a 5GC-compatible network interface protocol such as carrier Ethernet protocols, or some other suitable protocol. Network connectivity may be provided to/from the network device 1400 via a fiber optic or wireless backhaul. The CN interface circuitry 1414 may include one or more dedicated processors or FPGAs to communicate using one or more of the aforementioned protocols. In some implementations, the CN interface circuitry 1414 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

### Examples

In the following sections, further exemplary embodiments are provided.

Example 1 includes a method comprising: identifying a user equipment (UE) capability for a processing delay associated with transitioning an artificial intelligence (AI) / (ML) model to an inference state to perform an inference; and generating, for transmission to a network, a message to indicate the processing delay.

Example 2 includes the method of example 1, wherein the processing delay is based on one or more characteristics of the AI/ML model.

Example 3 includes the method of example 1 or 2, wherein the processing delay includes a transfer time to transfer model parameters associated with the AI/ML model from a first memory to a second memory.

Example 4 includes the method of any preceding example, wherein the processing delay is associated with transitioning the AI/ML model to the inference state from an active state, and wherein the method further comprises: generating, for transmission to the network, applicability information for the AI/ML model; and transitioning the AI/ML model to the active state from an inactive state based on the applicability information.

Example 5 includes the method of example 4, wherein the processing delay is a first processing delay, and wherein the method further comprises: identifying a second processing delay associated with transitioning the AI/ML model to the active state from the inactive state; determining that the second processing delay is less than a threshold; and generating, for transmission based on determining that the second processing delay is less than the threshold, a radio resource control (RRC) reconfiguration complete message to include the applicability information.

Example 6 includes the method of example 4 or 5, wherein the processing delay is a first processing delay, and wherein the method further comprises: identifying a second processing delay associated with transitioning the AI/ML model to the active state from the inactive state; determining that the second processing delay is greater than a threshold; and generating, for transmission based on determining that the second processing delay is less than the threshold, UE assistance information to include the applicability information.

Example 7 includes the method of any preceding example, further comprising: identifying an inference delay associated with performing the inference; and generating the message to further indicate the inference delay.

Example 8 includes the method of example 7, wherein the inference delay is based on the AI/ML model.

Example 9 includes the method of any preceding example, wherein the AI/ML model is a first AI/ML model, and wherein the processing delay is based on switching to a first AI/ML function associated with the first AI/ML model from a second AI/ML function associated with a second AI/ML model.

Example 10 includes the method of any preceding example, further comprising: receiving a reference signal; performing the inference based on the reference signal; and generating, for transmission, a report based on the inference, wherein the report is a periodic report, a semi-persistent report, or an aperiodic report, and wherein the report is transmitted within a timeline requirement that is based on the processing delay.

Example 11 includes a method comprising: receiving, from a user equipment (UE), a UE capability for a processing delay associated with transitioning an artificial intelligence (AI) / (ML) model to an inference state to perform an inference; and generating, for transmission to the UE, a message to schedule a report associated with the AI/ML model based on the UE capability.

Example 12 includes the method of example 11, wherein the processing delay is based on one or more characteristics of the AI/ML model.

Example 13 includes the method of example 11 or 12, wherein the processing delay is associated with transitioning the AI/ML model to the inference state from an active state, and wherein the method further comprises: receiving, from the UE, applicability information for the AI/ML model, wherein the AI/ML model is to transition from an inactive state to the active state based on the applicability information.

Example 14 includes the method of example 13, wherein the processing delay is a first processing delay, and wherein the applicability information is received in a radio resource control (RRC) reconfiguration complete message based a second processing delay associated with transitioning the AI/ML model to the active state from the inactive state being less than a threshold.

Example 15 includes the method of example 13 or 14, wherein the processing delay is a first processing delay, and wherein the applicability information is received in UE assistance information based on a second processing delay associated with transitioning the AI/ML model to the active state from the inactive state being greater than a threshold.

Example 16 includes the method of any of examples 11-15, further comprising receiving, from the UE, an indication of an inference delay associated with performing the inference with the AI/ML model.

Example 17 includes the method of any of examples 11-16, further comprising: generating, for transmission, a reference signal on which the UE is to perform a measurement for the inference; and receiving a report based on the inference, wherein the report is a periodic report, a semi-persistent report, or an aperiodic report, and wherein the report is received in accordance with a timeline requirement that is based on the processing delay.

Example 18 includes an apparatus comprising processor circuitry to: receive a radio resource control (RRC) reconfiguration message with configuration information associated with an artificial intelligence (AI) / machine learning (ML) model; identify a processing delay associated with transitioning the AI/ML model from an inactive state to an active state; determine, based on the processing delay whether to transmit applicability information associated with the AI/ML model via an RRC reconfiguration complete message or UE assistance information; and generate the applicability information for transmission based on said determining. The apparatus may further comprise interface circuitry coupled to the processor circuitry to enable communication.

Example 19 includes the apparatus of example 18, wherein to determine whether to transmit the applicability information via the RRC reconfiguration complete message or the UE assistance information includes to determine to transmit the applicability information via the RRC reconfiguration complete message based on the processing delay being less than a threshold.

Example 20 includes the apparatus of example 18 or 19, wherein to determine whether to transmit the applicability information via the RRC reconfiguration complete message or the UE assistance information includes to determine to transmit the applicability information via the UE assistance information based on the processing delay being greater than a threshold.

Another example may include one or more non-transitory computer-readable media comprising instructions to cause an electronic device, upon execution of the instructions by one or more processors of the electronic device, to perform one or more elements of a method described in or related to any of examples 1-20, or any other method or process described herein.

Another example may include an apparatus comprising logic, modules, or circuitry to perform one or more elements of a method described in or related to any of examples 1-20, or any other method or process described herein.

Another example may include a method, technique, or process as described in or related to any of examples 1-20, or portions or parts thereof.

Another example may include an apparatus comprising: one or more processors and one or more computer-readable media comprising instructions that, when executed by the one or more processors, cause the one or more processors to perform the method, techniques, or process as described in or related to any of examples 1-20, or portions thereof.

Another example may include a signal as described in or related to any of examples 1-20, or portions or parts thereof.

Another example may include a datagram, information element, packet, frame, segment, PDU, or message as described in or related to any of examples 1-20, or portions or parts thereof, or otherwise described in the present disclosure.

Another example may include a signal encoded with data as described in or related to any of examples 1-20, or portions or parts thereof, or otherwise described in the present disclosure.

Another example may include a signal encoded with a datagram, IE, packet, frame, segment, PDU, or message as described in or related to any of examples 1-20, or portions or parts thereof, or otherwise described in the present disclosure.

Another example may include an electromagnetic signal carrying computer-readable instructions, wherein execution of the computer-readable instructions by one or more processors is to cause the one or more processors to perform the method, techniques, or process as described in or related to any of examples 1-20, or portions thereof.

Another example may include a computer program comprising instructions, wherein execution of the program by a processing element is to cause the processing element to carry out the method, techniques, or process as described in or related to any of examples 1-20, or portions thereof.

Another example may include a signal in a wireless network as shown and described herein.

Another example may include a method of communicating in a wireless network as shown and described herein.

Another example may include a system for providing wireless communication as shown and described herein.

Another example may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method comprising:
identifying a user equipment (UE) capability for a processing delay associated with transitioning an artificial intelligence or machine learning (AI/ML) model to an inference state to perform an inference; and
generating, for transmission to a network, a message to indicate the processing delay.

2. The method of claim 1, wherein the processing delay is based on at least one characteristic of the AI/ML model; or
wherein the processing delay includes a transfer time to transfer model parameters associated with the AI/ML model from a first memory to a second memory.

3. The method of claim 1 or 2, wherein the processing delay is associated with transitioning the AI/ML model to the inference state from an active state, and wherein the method further comprises:
generating, for transmission to the network, applicability information for the AI/ML model; and
transitioning the AI/ML model to the active state from an inactive state based on the applicability information.

4. The method of claim 3, wherein the processing delay is a first processing delay, and wherein the method further comprises:
identifying a second processing delay associated with transitioning the AI/ML model to the active state from the inactive state; and
generating, for transmission based on determining that the second processing delay is less than a threshold, a radio resource control (RRC) reconfiguration complete message to include the applicability information; or.
generating, for transmission based on determining that the second processing delay is greater than the threshold, UE assistance information to include the applicability information.

5. The method of any preceding claim, further comprising:
identifying an inference delay associated with performing the inference; and
generating the message to further indicate the inference delay.

6. The method of any preceding claim, further comprising:
receiving a reference signal;
performing the inference based on the reference signal; and
generating, for transmission, a report based on the inference, wherein the report is a periodic report, a semi-persistent report, or an aperiodic report, and wherein the report is transmitted within a timeline requirement that is based on the processing delay.

7. The method of any preceding claim, wherein the processing delay is a first processing delay associated with beam management, and wherein the message further includes a second processing delay associated with channel state information (CSI) prediction.

8. A method comprising:
receiving, from a user equipment (UE), UE capability information to indicate a processing delay associated with transitioning an artificial intelligence or machine learning (AI/ML) model to an inference state to perform an inference; and
generating, for transmission to the UE, a message to schedule a report associated with the AI/ML model based on the UE capability information.

9. The method of claim 8, wherein the processing delay is associated with transitioning the AI/ML model to the inference state from an active state, and wherein the method further comprises:
receiving, from the UE, applicability information for the AI/ML model, wherein the AI/ML model is to transition from an inactive state to the active state based on the applicability information; and, optionally,
wherein the processing delay is a first processing delay, and wherein:
the applicability information is received in a radio resource control (RRC) reconfiguration complete message based a second processing delay associated with transitioning the AI/ML model to the active state from the inactive state being less than a threshold; or
the applicability information is received in UE assistance information based a second processing delay associated with transitioning the AI/ML model to the active state from the inactive state being greater than a threshold.

10. The method of claim 8 or 9, further comprising:
generating, for transmission, a reference signal on which the UE is to perform a measurement for the inference; and
receiving a report based on the inference, wherein the report is a periodic report, a semi-persistent report, or an aperiodic report, and wherein the report is received in accordance with a timeline requirement that is based on the processing delay.

11. The method of any of claims 8-10, wherein the processing delay is a first processing delay associated with beam management, and wherein the UE capability information further indicates a second processing delay associated with channel state information (CSI) prediction.

12. Processor circuitry to:
generate user equipment (UE) capability information that indicates an additional delay associated with a channel state information (CSI) prediction or a beam management inference; and
output the UE capability information for transmission to a network.

13. The processor circuitry of claim 12, wherein the additional delay is a first additional delay associated with the CSI prediction and wherein the UE capability information further includes a second additional delay associated with the beam management inference.

14. The processor circuitry of claim 12 or 13, wherein the additional delay includes a processing delay associated with transitioning an artificial intelligence or machine learning (AI/ML) model to an inference state to perform an inference.

15. The processor circuitry of any of claims 12-14, wherein the additional delay corresponds to an inference delay associated with performing the CSI prediction or the beam management inference.
